# FASCICULE DE BREVET EUROPEEN

(11) **EP 2 509 773 B1**
(45) Date de publication et mention de la délivrance du brevet: **06.02.2019**
(21) Numéro de dépôt: 10795932.2
(22) Date de dépôt: 07.12.2010
(51) Int. Cl.: B29C 70/22, B29C 70/32, B29C 53/62, B29C 53/70, F16C 7/00, B29C 70/48, B29C 70/54, B29L 31/00, B29C 53/58, B29C 53/60, F16C 7/02

(54) **PROCEDE DE FABRICATION D'UNE BIELLE EN MATERIAU COMPOSITE COMPRENANT UNE SUREPAISSEUR LOCALISEE**
VERFAHREN ZUR HERSTELLUNG EINER VERBINDUNGSSTREBE AUS EINEM VERBUNDSTOFF MIT LOKALISIERTER HÖHERER STÄRKE
PROCESS FOR MANUFACTURING A CONNECTING ROD MADE OF A COMPOSITE HAVING A LOCALIZED OVERTHICKNESS

(30) Priorité: 08.12.2009 FR 0905927
(43) Date de publication de la demande: 17.10.2012
(73) Titulaire: Safran Landing Systems, 78140 Vélizy-Villacoublay (FR)
(72) Inventeur: MASSON, Richard, 78350 Les Loges en Josas (FR); DUNLEAVY, Patrick, F-91120 Palaiseau (FR)
(74) Mandataire: Beaudouin-Lafon, Emmanuel
(86) Numéro de dépôt international: PCT/EP2010/007429
(87) Numéro de publication internationale: WO 2011/069640

(56) Documents cités:
- EP-A1- 1 798 428
- DE-A1-102007 015 909
- DE-A1-102007 015 909
- DE-A1-102007 026 453
- GB-A- 2 260 961
- US-A- 4 992 313
- US-A- 6 036 904

## Description

L'invention concerne un procédé de fabrication d'une bielle en matériau composite comportant un corps principal de type tubulaire ou analogue dont une partie telle qu'une extrémité présente une surépaisseur de matériau composite.

### ARRIERE PLAN DE L'INVENTION

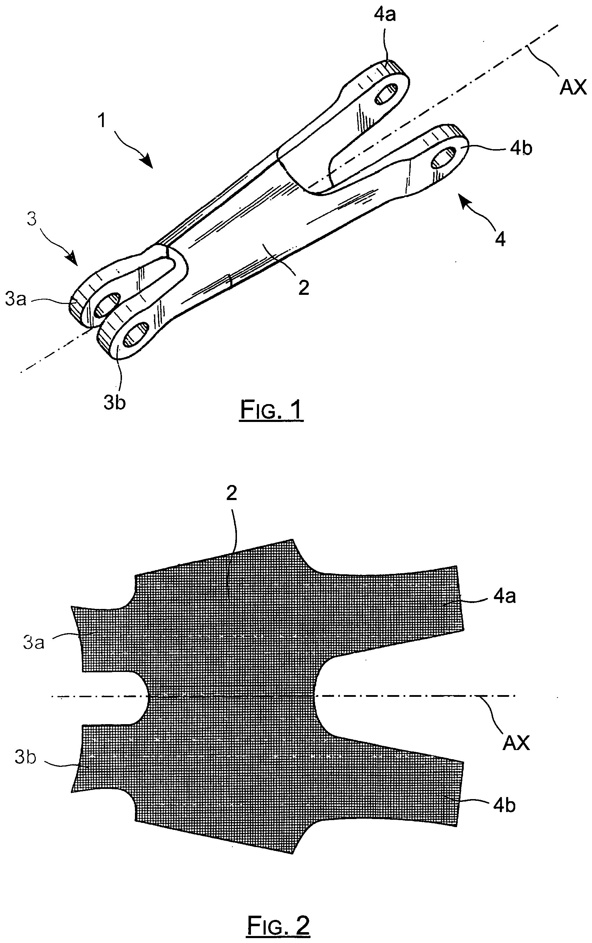

Une telle bielle qui est représentée dans la figure 1 en y étant repérée par 1 comprend un corps principal creux et généralement tubulaire repéré par 2 prolongé à chacune de ses extrémités par une chape double, ces chapes étant ici repérées par 3 et 4.

Chaque chape double 3, 4 comprend plus particulièrement deux ailes, repérées par 3a, 3b, 4a et 4b qui sont constituées d'une épaisseur de matériau composite supérieure à l'épaisseur nominale de matériau composite dans le reste de la bielle. Les deux ailes de chaque chape s'étendent parallèlement à la direction générale du corps principal creux, et chaque aile comprend un perçage équipé d'une bague interne métallique.

Selon un procédé connu du document de brevet FR2893532, cette bielle est fabriquée intégralement en matériau composite à partir de tissus de fibres renforçantes qui est d'abord découpé selon une forme représentée en figure 2. Cette forme comprend une portion centrale correspondant au corps principal creux 2, et quatre extensions correspondant chacune à une aile de l'une des deux chapes doubles.

Le tissu utilisé est un tissu de fibres de carbone d'épaisseur constante, de type 2,5D, c'est-à-dire comprenant plusieurs couches de fibres tissées qui sont superposées les unes aux autres, qui sont liées les unes aux autres par des fibres de liaison additionnelles.

D'une manière générale, la fabrication de cette bielle consiste à replier le tissus de la figure 2 pour lui donner une forme générale tubulaire, par exemple en l'appliquant sur un mandrin ou analogue, puis à injecter de la résine dans le tissus de fibres renforçantes et à cuire l'ensemble pour polymériser cette résine.

L'augmentation d'épaisseur des chapes est réalisée préalablement à la mise en forme du tissu et à l'injection de résine. Elle est obtenue en coupant les fibres de liaison du tissus 2,5D au niveau des chapes de manière à désolidariser localement les couches de fibres tissées constituant ce tissu.

Des couches intercalaires additionnelles sont alors ajoutées localement entre les couches initiales qui ont été désolidarisées, ce qui permet d'augmenter significativement l'épaisseur de manière locale. Après ajout des couches intercalaires, des fibres dites transverses sont passées à travers l'ensemble pour solidariser toutes les couches les unes aux autres.

Cette solution qui permet d'accroître localement l'épaisseur de la paroi en matériau composite constituant la bielle, au niveau des chapes reste cependant coûteuse et complexe à mettre en oeuvre dans un contexte d'industrialisation, du fait qu'elle nécessite de désolidariser des couches et d'intercaler de nouvelles couches de fibres tissées.

D'autre part, le document EP 1 798 428 décrit un procédé de fabrication d'une pièce en matériau composite, comprenant les étapes de :
- fabriquer un mandrin formant un tout rigide apte à recevoir des couches de fibres renforçantes;
- appliquer alternativement autour du mandrin, d'une part des couches de fibres tressées s'étendant sur toute la longueur du mandrin en étant appliquées par déplacement du mandrin longitudinalement dans une machine de tressage de fibres renforçantes, et d'autre part des morceaux de tissus disposés localement autour du mandrin au niveau d'une portion de renforcement de la pièce correspondant à une partie de la longueur du mandrin;
- usiner la portion de renforcement comportant les couches de fibres tissées pour y former une interface destinée à recevoir un axe mécanique liant la bielle à un autre élément mécanique.

### OBJET DE L'INVENTION

Le but de l'invention est de proposer une solution pour remédier à cet inconvénient en proposant un procédé de fabrication d'une bielle en matériau composite comportant une surépaisseur localisée le long de son axe principal.

### RESUME DE L'INVENTION

A cet effet, l'invention a pour objet un procédé de fabrication d'une bielle en matériau composite, comprenant les étapes de :
- fabriquer un mandrin formant un tout rigide apte à recevoir des couches de fibres renforçantes ;
- appliquer alternativement autour du mandrin, d'une part des couches de fibres tressées s'étendant sur toute la longueur du mandrin en étant appliquées avec une machine de tressage de fibres renforçantes, et d'autre part des couches de fibres bobinées autour du mandrin au niveau d'une portion de renforcement de la bielle correspondant à une partie de la longueur du mandrin, ces couches bobinées étant appliquées avec une machine de bobinage d'un lien constitué de fibres renforçantes ;
- injecter et polymériser de la résine dans les couches de fibres tressées et bobinées pour établir une cohésion liant rigidement les couches tressées aux couches bobinées;
- usiner la portion de renforcement comportant chaque couche bobinée et chaque couche de fibres tissées pour y former une interface destinée à recevoir un axe mécanique liant la bielle à un autre élément mécanique.

La bielle qui comporte une surépaisseur s'étendant localement le long de son axe principal est ainsi obtenue essentiellement par combinaison des procédés simples que sont le tressage et le bobinage, ce qui permet d'industrialiser le procédé avec un coût de fabrication très compétitif.

Le procédé selon l'invention permet ainsi de fabriquer une pièce dont l'épaisseur de matériau composite diffère entre deux parties de cette pièce espacées l'une de l'autre le long de l'axe principal.

Procédé tel que défini ci-dessus, dans lequel la portion de renforcement est située à une extrémité de la bielle, et dans lequel l'étape d'usinage comprend des opérations de fraisage et de perçage des couches de fibres renforçantes pour former au niveau de cette extrémité deux ailes d'une chape double.

Procédé tel que défini ci-dessus, dans lequel la portion de renforcement est située entre les extrémités de la bielle, et dans lequel l'étape d'usinage comprend une opération de perçage des couches de fibres renforçantes pour y former un palier.

Procédé tel que défini ci-dessus, dans lequel on utilise un mandrin présentant une extrémité aplatie correspondant à la portion de renforcement, et dans lequel l'étape d'usinage comprend des opérations de fraisage et de perçage pour former au niveau de cette extrémité une aile de chape simple.

Procédé tel que défini ci-dessus, dans lequel le lien utilisé est une bande de fibres renforçantes tissées.

Procédé tel que défini ci-dessus, dans lequel le lien est bobiné selon une hélicoïde ayant un angle prédéterminé.

Procédé tel que défini ci-dessus, dans lequel on applique plusieurs couches bobinées selon des angles d'hélicoïdes différant les uns des autres.

### BREVE DESCRIPTION DES FIGURES

La figure 1 déjà décrite est une vue d'ensemble d'une bielle en matériau composite connue qui comprend deux chapes doubles ;
La figure 2 déjà décrite est une vue à plat de la pièce de tissus de fibres renforçantes utilisée pour fabriquer la bielle de la figure 1 conformément à un procédé connu ;
La figure 3 est une vue en perspective d'un mandrin utilisé pour fabriquer une bielle avec le procédé selon l'invention ;
La figure 4 est une vue en perspective montrant schématiquement une opération de dépôt d'une couche de fibres renforçantes tressée autour du mandrin dans le procédé selon l'invention ;
La figure 5 est une vue en perspective montrant schématiquement le mandrin entouré par une couche de fibres renforçantes tressées autour de ce mandrin ;
La figure 6 est une vue en perspective montrant schématiquement une opération de dépôt d'une couche de fibres renforçantes bobinées autour du mandrin dans le procédé selon l'invention ;
La figure 7 montre en perspective un corps de bielle brut tel qu'il se présente après une opération d'injection de résine ;
La figure 8 montre en perspective la bielle obtenue avec le procédé selon l'invention une fois que ses extrémités ont été usinées ;
La figure 9 est une représentation montant schématiquement en coupe un exemple de chape obtenue avec le procédé selon l'invention.

### DESCRIPTION DETAILLEE DE L'INVENTION

L'idée à la base de l'invention est de fabriquer une pièce en matériau composite formée sur un mandrin en alternant des opérations d'application de couches de fibres tressées autour du mandrin sur toute sa longueur, avec des opérations de bobinage de liens de fibres renforçantes bobinés uniquement au niveau de chaque portion de renforcement afin d'y constituer une surépaisseur locale.

Les opérations de tressage et de bobinage sont réalisées successivement autant de fois que nécessaire, jusqu'à obtenir les épaisseurs désirées, c'est-à-dire d'une part l'épaisseur nominale de la pièce et d'autre part la surépaisseur souhaitée au niveau de la portion de renforcement.

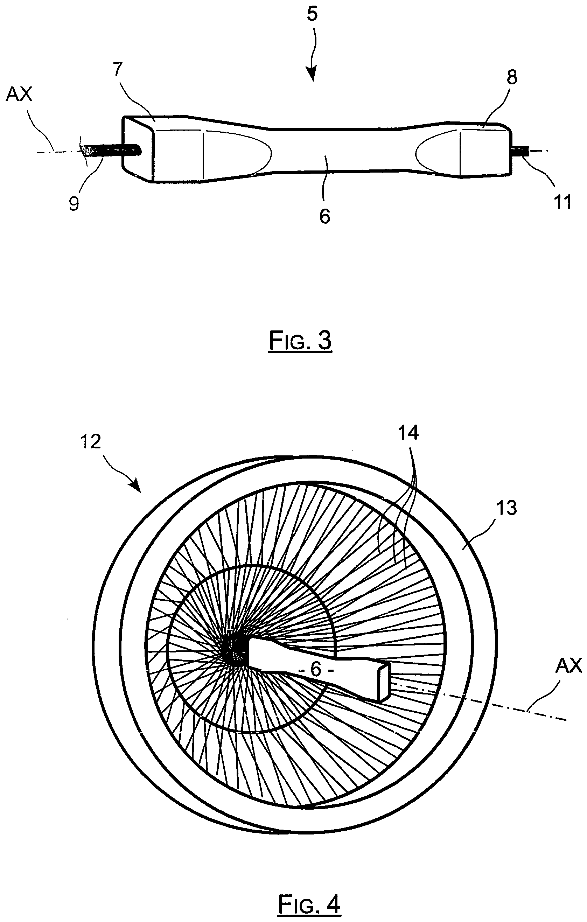

Dans l'exemple des figures 3 et suivantes, le mandrin qui est repéré par 5 s'étend selon un axe longitudinal AX, en se présentant sous forme d'un manchon ayant une forme généralement de révolution autour de cet axe.

Cette forme est plus particulièrement évolutive le long de l'axe AX puisque dans la région centrale 6, la section transversale du mandrin 5 est à peu près circulaire, alors qu'au niveau de la première et de la seconde extrémité, repérées respectivement par 7 et 8, le mandrin 5 présente des sections rectangulaires de dimensions différentes.

Dans l'exemple des figures, la section du mandrin 5 au niveau de sa première extrémité 7 est significativement supérieure à la section de sa seconde extrémité 8. La première extrémité est celle coïncidant avec la chape double de la bielle à former sur ce mandrin 5, alors que la seconde extrémité coïncide avec l'autre chape de cette bielle qui est ici une chape simple.

Dans l'exemple des figures, le mandrin est une pièce généralement creuse, mais dont la seconde extrémité est prévue pleine en étant formée de matériau composite pour constituer la région centrale de la chape simple.

Deux tiges repérées par 9 et 11 sont rigidement solidarisées aux extrémités 7 et 8 du mandrin, en s'étendant selon la direction longitudinale AX. Ces tiges permettent de manipuler le mandrin sans devoir le saisir par sa face externe et de le maintenir dans une machine de tressage.

Ce mandrin 5 qui sert au dépôt des couches de fibres renforçantes a pour rôle de supporter ces couches et de donner la forme interne de la pièce. Il est avantageusement fabriqué à partir de couches de tissus de fibres de carbone pré-imprégné mis en position et pré-polymérisées. La pré-polymérisation permet de donner à ce mandrin la rigidité mécanique appropriée pour les manipulations, et de le rendre étanche pour éviter que de la résine ne puisse pénétrer dans son espace interne creux.

Comme représenté en figure 4, une fois que le mandrin 5 est terminé, il est engagé dans la machine de tressage généralement repérée par 12, de manière à tresser autour de celui-ci une première couche de fibres renforçantes en carbone. Cette machine de tressage comprend principalement en anneau circonférentiel 13 centré sur l'axe AX portant à sa face arrière une série de bobines de fibres de carbone, ces fibres de carbone étant repérées par 14.

Lorsque le mandrin 5 est déplacé le long de l'axe AX à travers l'anneau 13 de la machine de tressage, l'ensemble étant actionné par différents moyens pilotés et asservis non représentés, une chaussette de fibres de carbone se tresse autour de la face externe de révolution du mandrin 5 tout en venant se plaquer à cette face externe.

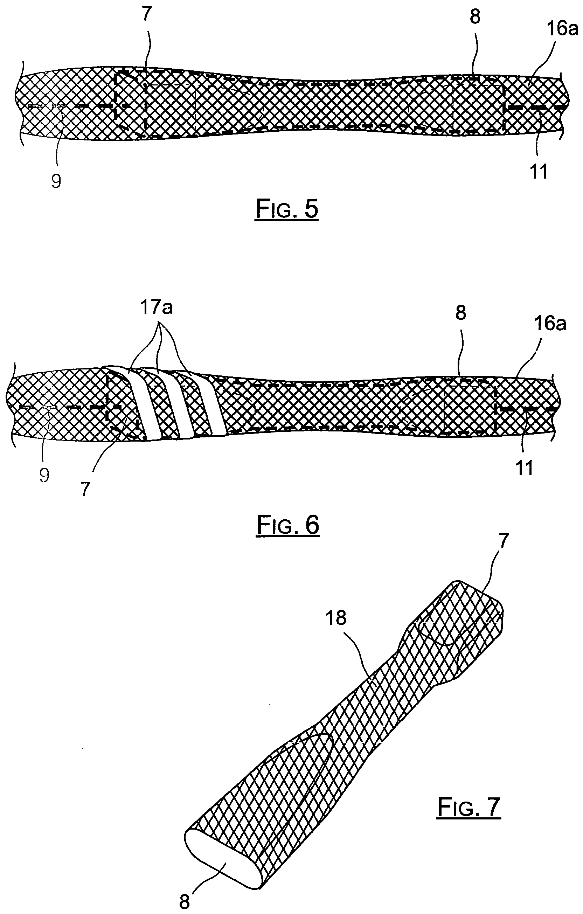

Comme visible dans la figure 5, la première couche de fibres de carbone tressée, repérée par 16a, entoure le mandrin 5 sur toute la longueur de ce mandrin le long de l'axe AX et elle dépasse au delà de ses extrémités 7 et 8, tout en étant sensiblement serrée contre la face externe de ce mandrin 5.

Lorsque cette première couche tressée 16a a été déposée, une première bande est bobinée autour de la première extrémité 7 du mandrin 5, par dessus cette première couche tressée 16a, de manière à former une surépaisseur renforçant localement la bielle le long de l'axe AX, ici au niveau de son extrémité.

Cette première bande bobinée qui apparaît dans la figure 5 en y étant repérée par 17a permet d'augmenter localement l'épaisseur de matière constituant la bielle au niveau sa première extrémité, par rapport à l'épaisseur de matière constituant cette bielle dans sa région centrale.

La première extrémité de la bielle coïncide avec la première extrémité 7 du mandrin 5, la région centrale de la bielle coïncide avec la région centrale 6 du mandrin 5, et la seconde extrémité de la bielle coïncide avec la seconde extrémité 8 du mandrin 5.

Comme représenté schématiquement dans la figure 5, la bande 17a qui est bobinée autour de la première extrémité 7 est disposée selon une forme générale d'hélicoïde à base sensiblement rectangulaire, conformément à la section de l'extrémité 7 du mandrin 5 qu'elle entoure.

Cette première bande 17a est bobinée selon un angle d'hélicoïde prédéterminé par rapport à l'axe AX, cet angle étant défini pour apporter la meilleure répartition de contrainte dans l'extrémité de bielle lorsque celle-ci est chargée mécaniquement.

Dans la figure 6, la bande 17a entoure l'extrémité 7 sur seulement trois tours d'hélicoïde qui sont espacés les uns des autres. Mais plusieurs couches de bandes peuvent être bobinées successivement autour de cette première extrémité, durant une même phase de bobinage, de manière à augmenter la surépaisseur que l'on introduit ainsi. Eventuellement, les spires consécutives de la bande 17a peuvent se chevaucher partiellement, de manière à accroître l'épaisseur ajoutée.

Par exemple, cette phase de bobinage peut intégrer une étape durant laquelle le mandrin est déplacé dans un sens le long de l'axe AX, suivie d'une autre étape dans laquelle il est déplacé en sens opposé le long de l'axe AX, ce qui permet de constituer successivement des hélicoïdes d'orientations opposées.

Il est également possible de bobiner deux bandes formant des hélicoïdes d'orientations opposées, c'est-à-dire de sens inverse, en une seule passe du mandrin le long de l'axe AX, en utilisant deux appareillages bobinant chacun une bande et tournant en sens inverse autour de l'axe AX.

L'application de la bande peut être réalisée en faisant tourner le mandrin autour de l'axe AX dans un appareillage de bobinage qui est fixe. Ce bobinage peut aussi être réalisé avec une machine à bobiner comprenant un anneau entourant le mandrin 5 en étant apte à pivoter autour de celui-ci.

Un tel anneau peut être monté sur un ensemble de galets qui l'entourent, l'un des galets étant motorisé pour piloter la rotation de l'anneau. Cet anneau de bobinage porte alors une ou plusieurs bobines de bande ou de fibre à bobiner, chaque bobine étant apte à tourner par rapport à l'anneau qui la porte, autour d'un axe parallèle à l'axe AX de l'anneau.

Dans ces conditions, la mise en rotation de l'anneau et l'avance du mandrin le long de l'axe AX permettent de réaliser un bobinage ayant un pas et un angle d'hélicoïde pouvant être ajustés en fonction du besoin.

Une fois que cette première bande 17a a été bobinée autour de la première extrémité, l'ensemble du mandrin 5 avec la première couche tressée 16a et la première bande bobinée 17a est à nouveau présenté dans l'anneau 13, de manière à tresser une autre couche de fibres renforçantes autour de cet ensemble.

Une fois que cette deuxième couche de fibres renforçantes a été tressée autour de l'ensemble, une deuxième bande est bobinée autour de la première extrémité 7, de façon analogue à la première bande, par dessus cette deuxième couche tressée, ce qui permet d'accroître encore l'épaisseur de matière de l'extrémité de la bielle par rapport à l'épaisseur de matière de la région centrale de cette bielle.

Différentes opérations d'application de couches tressées et de bandes bobinées sont ainsi réalisées successivement, jusqu'à application de la dernière couche tressée. Eventuellement, et compte tenu de la structure recherchée, deux couches tressées peuvent être contiguës, c'est-à-dire ne pas comporter entre elles de couche intercalaire bobinée.

L'ensemble constitué par le mandrin et les couches tressées et bobinées qu'il porte est alors installé dans un moule dédié, constitué par exemple de deux parties ayant chacune une empreinte correspondant à la forme extérieure d'une moitié de cet ensemble.

Ce moule est pourvu de moyens d'injection de résine qui sont alors actionnés pour injecter de la résine dans toute l'épaisseur des différentes couches tressées et bobinées. Le moule est ensuite piloté pour cuire l'ensemble de manière à polymériser complètement la résine qui a été injectée.

Une fois que la polymérisation est terminée, l'ensemble est retiré de ce moule et constitue une pièce brute représentée schématiquement en figure 7 en y étant repérée par 18.

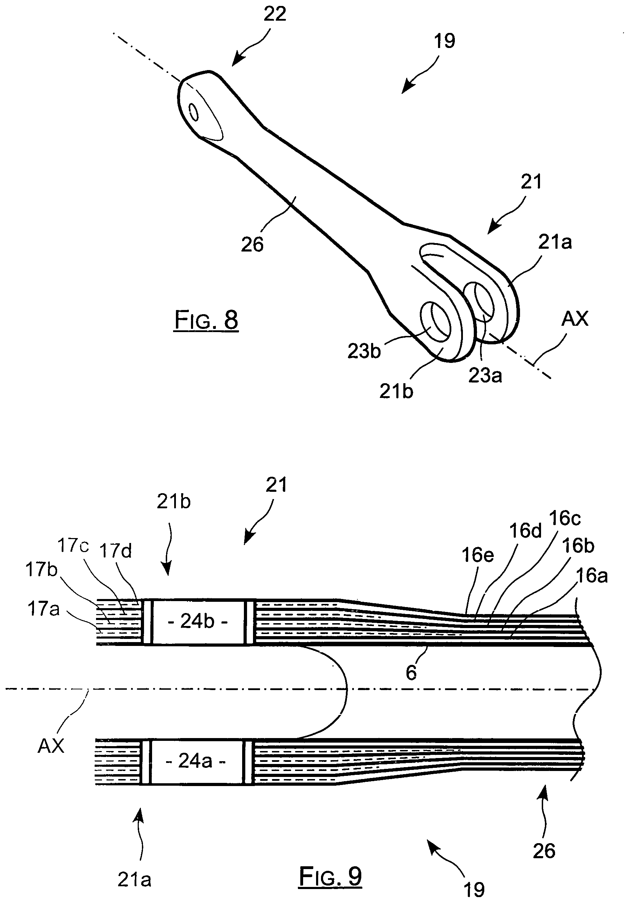

Cette pièce brute 18 est ensuite usinée au niveau de ses extrémités de manière à former la bielle finie, repérée par 19 en figure 8, et qui comprend ici une chape double 21 à sa première extrémité, et une chape simple 22 à son autre extrémité.

Comme visible dans les figures, l'usinage de la chape double 21 peut être assuré par exemple par passage d'une fraise au niveau de la première extrémité de la pièce brute, selon un plan contenant l'axe AX.

Le passage de cette fraise permet de former une rainure qui sépare l'une de l'autre les deux ailes ou branches 21a et 21b de la chape double 21, qui sont ainsi espacées d'une distance correspondant à l'épaisseur de la fraise. Différents usinages additionnels sont également réalisés pour donner aux contours de ces ailes 21a et 21b des formes généralement arrondies prédéfinies.

Complémentairement, une opération de perçage est réalisée selon une direction normale au plan de passage de la fraise, pour réaliser dans les ailes 21a et 21b les deux alésages 23a et 23b permettant d'engager un axe dans cette chape double lorsque la bielle est montée.

Deux bagues métalliques 24a et 24b sont ensuite montées respectivement dans l'alésage 23a et dans l'alésage 23b, de manière à répartir le plus uniformément possible la contrainte mécanique appliquée par l'axe à la chape montée sur cet axe lorsque l'ensemble est chargé.

Comme visible dans la figure 9, le procédé selon l'invention permet de fabriquer une bielle 19 ayant une extrémité en forme de chape comprenant deux ailes 21a et 21b formées d'épaisseurs de matériau composite significativement plus importantes que les épaisseurs de matériau composite constituant le reste de la bielle, et en particulier son corps principal creux 26.

Plus particulièrement, dans l'exemple illustré en figure 8, on a tressé une première couche de fibres renforçantes 16a autour du mandrin 5, avant de bobiner une première bande 17a autour de cette première couche 16a, mais uniquement au niveau de la première extrémité. Une deuxième couche de fibres tressées 16b a ensuite été appliquée avant bobinage d'une deuxième bande, toujours au niveau de la première extrémité. Une troisième couche de fibres tressées 16c a ensuite été tressée autour de l'ensemble ainsi constitué avant de bobiner une troisième bande 17c. Une quatrième couche de fibres tressées 16d a encore été appliquée sur cet ensemble avant de bobiner une quatrième bande 17d localement autour de la première extrémité. Une dernière couche de fibres tressées 16e a ensuite été tressée autour de l'ensemble.

Comme visible dans la figure 9, l'épaisseur des chapes vaut ici sensiblement le double de l'épaisseur de matériau dans le reste de la chape. D'une manière générale, les opérations d'application de couches tressées et bobinées sont répétées autant de fois que nécessaire, jusqu'à obtenir l'épaisseur nominale souhaitée, et la surépaisseur souhaitée dans la zone de renforcement.

Dans l'exemple des figures, le matériau qui est bobiné autour de la première extrémité est un lien de fibres renforçantes se présentant sous forme d'une bande de fibres tissées. Mais il est également possible de bobiner directement de la fibre renforçante, ou encore un ruban, ou bien une mèche de fibres renforçantes. D'une manière plus générale, il s'agit de bobiner un lien fabriqué en fibres renforçantes qui sont avantageusement des fibres de même nature que les fibres utilisées pour les couches tressées, ou qui tout au moins sont compatibles avec les fibres des couches tressées.

Ces liens bobinés permettent, outre l'apport de matière qu'ils constituent, d'enserrer les différentes couches de fibres renforçantes tressées en les plaquant fermement contre la face externe du mandrin. Cet enserrement permet d'augmenter la densité de fibres renforçantes dans la pièce finie, pour en accroître la tenue mécanique.

Par ailleurs, dans l'exemple des figures, le procédé est utilisé pour réaliser une surépaisseur de matériau composite en extrémité de bielle, pour former une chape double dont les ailes soient suffisamment épaisses.

Mais l'invention peut trouver des applications autres que la fabrication d'une chape double ayant deux ailes de forte épaisseur, en permettant notamment de fabriquer une bielle comprenant dans une région centrale de son corps principal une ouverture ou palier traversant destiné à recevoir un axe mécanique, ou encore une bielle comprenant à son extrémité une chape qui est simple au lieu d'être double comme dans l'exemple illustré sur les figures.

Il est ainsi possible de bobiner une ou des bandes par exemple dans une région centrale du corps de bielle de manière à en augmenter l'épaisseur, lorsque cette région centrale comporte un palier destiné à recevoir un axe mécanique d'un autre élément articulé. Un tel palier constitue, au même titre qu'une chape, une interface permettant de constituer une articulation de la bielle avec un autre composant mécanique. Dans ce cas, une fois que les couches de fibres renforçantes, tressées et enroulées au niveau du palier, ont été appliquées, et que la résine a été injectée et polymérisée, une opération de perçage des ces couches, selon la direction transversale à la bielle permet d'y former à proprement parler le palier.

La réalisation d'une chape simple en extrémité de la bielle peut quant à elle être assurée au moyen d'un mandrin ayant un corps principal creux cylindrique comme dans l'exemple illustré sur les figures, mais présentant une extrémité plate ayant une faible épaisseur.

Dans ce cas, les couches de fibres tressées peuvent être appliquées sur toute la longueur du mandrin, alors que les couches bobinées sont appliquées autour de cette extrémité aplatie du mandrin. Une fois que toutes les couches ont été appliquées, la résine est injectée et polymérisée, avant de procéder à un perçage de l'extrémité de bielle pour y former l'ouverture permettant de faire de cette extrémité une chape simple. Comme on l'aura compris, ce perçage est réalisé selon une direction normale au plan d'aplatissement de l'extrémité du mandrin.

Ainsi, l'invention s'applique d'une manière générale aux pièces de matériau composite telles que des bielles, c'est-à-dire s'étendant selon un axe principal et présentant une section transversale pleine ou creuse délimitée par un contour externe fermé et dotées d'une ou plusieurs interfaces, ces interfaces pouvant indifféremment être du type palier, chape simple ou bien chape double.

## Revendications

1. Procédé de fabrication d'une bielle (19) en matériau composite, comprenant les étapes de :
- fabriquer un mandrin (5) formant un tout rigide apte à recevoir des couches (16a-16e, 17a-17d) de fibres renforçantes (14) ;
- appliquer alternativement autour du mandrin (5), d'une part des couches de fibres tressées (16a-16e) s'étendant sur toute la longueur du mandrin (5) en étant appliquées par déplacement du mandrin longitudinalement dans une machine de tressage de fibres renforçantes (4), et d'autre part des couches de fibres bobinées (17a-17d) autour du mandrin (5) au niveau d'une portion de renforcement de la bielle (19) correspondant à une partie de la longueur du mandrin, ces couches bobinées (17a-17d) étant appliquées avec une machine de bobinage d'un lien (17a-17e) constitué de fibres renforçantes ;
- injecter et polymériser de la résine dans les couches (16a-16e, 17a-17d) de fibres tressées et bobinées pour établir une cohésion liant rigidement les couches tressées (16a-16e) aux couches bobinées (17a-17d) ;
- usiner la portion de renforcement comportant chaque couche bobinée (17a-17d) et chaque couche de fibres tissées (16a-16e) pour y former une interface destinée à recevoir un axe mécanique liant la bielle (19) à un autre élément mécanique.

2. Procédé selon la revendication1, dans lequel la portion de renforcement est située à une extrémité de la bielle (19), et dans lequel l'étape d'usinage comprend des opérations de fraisage et de perçage des couches de fibres renforçantes (17a-17d, 16a-16e) pour former au niveau de cette extrémité deux ailes d'une chape double (21).

3. Procédé selon la revendication1, dans lequel la portion de renforcement est située entre les extrémités de la bielle (19), et dans lequel l'étape d'usinage comprend une opération de perçage des couches de fibres renforçantes (17a-17d, 16a-16e) pour y former un palier.

4. Procédé selon la revendication1, dans lequel on utilise un mandrin présentant une extrémité aplatie correspondant à la portion de renforcement, et dans lequel l'étape d'usinage comprend des opérations de fraisage et de perçage pour former au niveau de cette extrémité une aile de chape simple.

5. Procédé selon l'une des revendications précédentes, dans lequel le lien utilisé est une bande de fibres renforçantes tissées.

6. Procédé selon l'une des revendications précédentes, dans lequel le lien est bobiné selon une hélicoïde ayant un angle prédéterminé.

7. Procédé selon l'une des revendications précédentes, dans lequel on applique plusieurs couches bobinées (17a-17d) selon des angles d'hélicoïdes différant les uns des autres.

## Patentansprüche

1. Verfahren zum Herstellen einer Verbindungsstange (19) aus einem Verbundwerkstoff, umfassend die Schritte:
- Herstellen eines Dorns (5), der ein starres Ganzes bildet, das dazu geeignet ist, Schichten (16a-16e, 17a-17d) aus verstärkenden Fasern (14) aufzunehmen;
- abwechselndes Aufbringen um den Dorn (5) herum einerseits von Schichten (16a-16e) aus geflochtenen Fasern, die sich über die gesamte Länge des Dorns (5) erstrecken, indem sie durch Verschieben des Dorns in der Längsrichtung in einer Flechtmaschine (4) zum Flechten von verstärkenden Fasern aufgebracht werden, und andererseits von Schichten (17a-17d) aus um den Dorn (5) gewickelten Fasern im Bereich eines Verstärkungsabschnittes der Verbindungsstange (19), der einem Teil der Länge des Dorns entspricht, wobei diese gewickelten Schichten (17a-17d) mit einer Wickelmaschine zum Wickeln eines Bandes (17a-17e) aufgebracht werden, das aus verstärkenden Fasern gebildet ist;
- Einspritzen und Polymerisieren von Harz in die bzw. in den Schichten (16a-16e, 17a-17d) aus geflochtenen und gewickelten Fasern, um eine Kohäsion herzustellen, die die geflochtenen Schichten (16a-16e) starr mit den gewickelten Schichten (17a-17d) verbindet;
- Bearbeiten des Verstärkungsabschnittes, der jede gewickelte Schicht (17a-17d) und jede Schicht (16a-16e) aus geflochtenen Fasern umfasst, um dort eine Schnittstelle zu bilden, die dazu bestimmt ist, eine mechanische Achse aufzunehmen, die die Verbindungsstange (19) mit einem anderen mechanischen Element verbindet.

2. Verfahren nach Anspruch 1, bei dem sich der Verstärkungsabschnitt an einem Ende der Verbindungsstange (19) befindet, und bei dem der Bearbeitungsschritt Fräs- und Bohrvorgänge zum Fräsen und Durchbohren der Schichten (17a-17d, 16a-16e) aus verstärkenden Fasern umfasst, um im Bereich dieses Endes zwei Schenkel eines doppelten Achslagers (21) zu bilden.

3. Verfahren nach Anspruch 1, bei dem sich der Verstärkungsabschnitt zwischen den Enden der Verbindungsstange (19) befindet, und bei dem der Bearbeitungsschritt einen Bohrvorgang zum Durchbohren der Schichten (17a-17d, 16a-16e) aus verstärkenden Fasern umfasst, um dort ein Lager zu bilden.

4. Verfahren nach Anspruch 1, bei dem man einen Dorn verwendet, der ein abgeflachtes Ende aufweist, das dem Verstärkungsabschnitt entspricht, und bei dem der Bearbeitungsschritt Fräs- und Bohrvorgänge umfasst, um im Bereich dieses Endes einen Schenkel eines einfachen Achslagers zu bilden.

5. Verfahren nach einem der vorhergehenden Ansprüche, bei dem das verwendete Band ein Band aus gewebten verstärkenden Fasern ist.

6. Verfahren nach einem der vorhergehenden Ansprüche, bei dem das Band gemäß einer Schraubenfläche gewickelt ist, die einen vorbestimmten Winkel hat.

7. Verfahren nach einem der vorhergehenden Ansprüche, bei dem man mehrere gewickelte Schichten (17a-17d) in unterschiedlichen Schraubenwinkeln aufbringt.

## Claims

1. A method for making a composite material connecting rod (19), comprising the steps of:
- producing a mandrel (5) forming a rigid whole adapted to receive layers (16a-16e, 17a-17d) of reinforcing fibers (14);
- alternately applying around the mandrel (5), on the one hand braided fiber layers (16a-16e) extending over the whole of the length of the mandrel (5) by being applied by moving the mandrel longitudinally in a reinforcing fiber (4) braiding machine, and on the other hand fiber layers (17a-17d) wound around the mandrel (5) at the level of a reinforcing portion of the connecting rod (19) corresponding to a portion of the length of the mandrel, these wound layers (17a-17d) being applied with a machine for winding a binding (17a-17e) constituted of reinforcing fibers;
- injecting resin into the layers (16a-16e, 17a-17d) of braided and wound fibers and polymerizing it to establish a cohesion rigidly connecting the braided layers (16a-16e) to the wound layers (17a-17d);
- machining the reinforcing portion including each wound layer (17a-17d) and each braided fiber layer (16a-16e) to form therein an interface intended to receive a mechanical shaft connecting the connecting rod (19) to another mechanical element.

2. The method as claimed in claim 1, wherein the reinforcing portion is situated at one end of the connecting rod (19), and wherein the machining comprises operations of milling and drilling the reinforcing fiber layers (17a-17d, 16a-16e) to form at the level of this end two arms of a double yoke (21).

3. The method as claimed in claim 1, wherein the reinforcing portion is situated between the ends of the connecting rod (19) and wherein the machining comprises an operation of drilling the reinforcing fiber layers (17a-17d, 16a-16e) to form a bearing therein.

4. The method as claimed in claim 1, wherein a mandrel is used having a flattened end corresponding to the reinforcing portion and wherein the machining comprises milling and drilling operations to form at the level of this end a single yoke arm.

5. The method as claimed in any one of the preceding claims, wherein the binding used is a woven reinforcing fiber tape.

6. The method as claimed in any one of the preceding claims, wherein the binding is wound in a helicoid having a predetermined angle.

7. The method as claimed in any one of the preceding claims, wherein a plurality of wound layers (17a-17d) is applied with different helicoid angles.
